# EUROPÄISCHE PATENTANMELDUNG

(11) **EP 1 296 119 A1**
(43) Veröffentlichungstag der Anmeldung: **26.03.2003**
(21) Anmeldenummer: 01125774.8
(22) Anmeldetag: 29.10.2001
(51) Int. Cl.: G01F 1/84

(54) **Messaufnehmer vom Vibrationstyp**

(30) Priorität: 21.09.2001 EP 01122801
(71) Anmelder: Endress + Hauser Flowtec AG, CH-4153 Reinach BL 1 (CH)
(72) Erfinder: Wenger, Dr. Alfred, CH-8413 Neftenbach (CH); Anklin, Dr. Martin, CH-4147 Aesch, BL (CH)
(74) Vertreter: Andres, Angelika

(57) **Zusammenfassung**

Der Meßaufnehmer (1) umfaßt wenigstens ein zumindest zeitweise vibrierendes Meßrohr (101) von vorgebbarem Meßrohrlumen zum Führen eines Fluids. Da Meßrohr (101) kommuniziert über ein in ein Einlaßende mündendes Einlaßrohrstück (103) und über ein in ein Auslaßende mündendes Auslaßrohrstück (104) mit einer angeschlossenen Rohrleitung und führt im Betrieb Biegeschwingungen um eine das Einlaß- und das Auslaßende imgaginär verbindende Schwingungsachse aus. Das Meßrohr (101) weist wenigstens ein bogenförmiges Rohrsegment (101c) von vorgebbarer Raumform auf, das sich einlaßseitig und auslaßseitg jeweils an ein gerades Rohrsegment (101a, 101b) anschließt. Auf direkt dem bogenförmigen Rohrsegment (101c) oder in dessen unmittelbarer Nähe ist wenigstens ein der Stabilisierung der Raumform dienendes Versteifungselement (111) und ggf. ein weiteres Versteifungselement (112) fixiert. Mittels der Versteifungselement (111, 112) wird die Querempfindlichkeit des Meßaufnehmer (1) erheblich verringert und somit dessen Meßgenauigkeit verbessert.

## Beschreibung

Die Erfindung betrifft einen, insb. für einen Coriolis-Massedurchflußmesser oder einen Coriolis-Massedurchfluß/ Dichtemesser geeigneten, Meßaufnehmer vom Vibrationstyp.

In der Meß- und Automatisierungstechnik werden zur Ermittlung des Massedurchflusses und/ oder der Dichte eines in einer Rohrleitung strömenden Fluids, insb. einer Flüssigkeit, oftmals solche Meßgeräte verwendet, die mittels eines Meßaufnehmers vom Vibrationstyp und einer daran angeschlossenen Meß- und Betriebsschaltung, im hindurchströmenden Fluid Reaktionskräfte, insb. mit dem Massedurchfluß korrespondierende Corioliskräfte und mit der Dichte korrespondierende Trägheitskräfte, bewirken und von diesen abgeleitet ein den jeweiligen Massedurchfluß und/ oder ein die jeweilige Dichte des Fluids repräsentierendes Meßsignal erzeugen.

Derartige Coriolis-Massedurchflußmesser oder Coriolis-Massedurchfluß/Dichtemesser sind z.B. in der WO-A 01/ 33 174, der WO-A 00/ 57 141, der WO-A 98/ 07 009, der US-A 57 96 001, der US-A 48 95 030, der US-A 47 81 069, der EP-A 1 001 254, der EP-A 553 939 oder in der nicht vorveröffentlichten europäischen Patentanmeldung 00 11 0091.6 beschrieben, die unter Verwendung eines Meßaufnehmers vom Vibrationstyp die entsprechenden Meßsignale liefern, wobei die Meßaufnehmer jeweils wenigstens ein dem Führen eines Fluids dienendes, ein Einlaßende und ein Auslaßende aufweisendes, zumindest segmentweise gekrümmtes und zumindest zeitweise vibrierendes Meßrohr von vorgebbarem Meßrohrlumen umfassen, welches Meßrohr
- zum Hindurchströmenlassen des Fluids über ein in das Einlaßende mündendes Einlaßrohrstück und über ein in das Auslaßende mündendes Auslaßrohrstück mit einer angeschlossenen Rohrleitung kommuniziert und
- zum Verformen des Meßrohrlumens im Betrieb Biegeschwingungen um eine das Einlaß- und das Auslaßende imaginär verbindende erste Schwingungsachse ausführt.

Zum Erzeugen bzw. Aufrechterhalten der Schwingungen des wenigstens einen Meßrohrs ist an den Meßaufnehmern ferner jeweils eine von vorgenannter Meß- und Betriebsschaltung gespeiste Erregeranordnung für das jeweils wenigstens eine Meßrohr vorgesehen. Die Erregeranordnung weist dazu wenigstens einen ersten, bevorzugt elektrodynamischen oder aber auch elektromagnetischen, Schwingungserreger auf, der im Betrieb von einem alternierenden, insb. bi-polaren, Erregerstrom durchflossen ist und der den Erregerstrom in eine auf das Meßrohr einwirkende Erregerkraft umwandelt.

Gekrümmte, z.B. U- oder V-artig geformte, Meßrohre insb. von Coriolis-Massedurchflußmessern werden im sogenannten Nutzmode üblicherweise zu Auslegerschwingungen angeregt, bei denen die Meßrohre einhergehend mit einer elastischen Verformung um die erste Schwingungsachse des Meßaufnehmers pendeln. Dazu ist der Schwingungserreger üblicherweise so im Meßaufnehmer angeordnet, daß er, insb. mittig, in einem Schwingungsbauch des Nutzmodes auf das Meßrohr einwirkt.

Bedingt durch die pendelartigen Auslegerschwingungen um die Längsachse werden im hindurchströmenden Fluid bekanntlich u.a. auch Corioliskräfte induziert, die ihrerseits wiederum dazu führen, daß den angeregten Auslegerschwingungen des Nutzmodes Auslegerschwingungen im sogenannten Coriolismode gleichfrequent überlagert werden. Bei Meßaufnehmern der beschriebenen Art entsprechen diese durch Corioliskräfte erzwungenen Auslegerschwingungen üblicherweise Drehschwingungen um eine, insb. senkrecht auf der ersten Schwingungsachse stehende, zweite Schwingungsachse, die im wesentlichen parallel zu einer gedachten Hochsachse des Meßaufnehmers verläuft.

Bei einer gekrümmten Rohrform werden bekanntlich durch thermisch bedingte Ausdehnungen, insb. auch bei der Verwendung von Materialien mit einem hohen thermischen Ausdehnungskoeffizienten, praktisch keine oder nur sehr gerinfügige mechanische Spannungen im Meßrohr selbst und/ oder in der angeschlossenen Rohrleitung hervorgerufen. Ferner kann das Meßrohr lang, insb. auch weit ausladend, ausgeführt sein und somit trotz einer relativ kurzen Einbaulänge, insb. auch bei relativ niedriger Erregerleistung, eine hohe Empfindlichkeit des Meßaufnehmers auf den zu messenden Massedurchfluß erzielt werden.

Die vorgenannten Umstände ermöglichen es auch, das Meßrohr bzw. die Meßrohre aus Materialien mit einem hohen thermischen Ausdehnungskoeffizienten und/ oder hohen Elastizitätsmodul, wie z.B. Edelstahl, herzustellen.

Die beiden zueinander parallel angeordneten, im wesentlichen identisch geformten Meßrohre der in der US-A 57 96 001 bzw. der WO-A 01/ 33 174 beschriebenen Meßaufnehmer sind im wesentlichen stetig gekrümmt, d.h. sie sind praktisch nirgends gerade. Demgegenüber weisen die Meßrohre z.B. der in den US-A 53 01 557, US-A 48 95 030, WO-A 00/ 57 141, WO-A 01/ 33 174 oder der referierten europäischen Patentanmeldung 00 11 0091.6 gezeigten Meßaufnehmer jeweils wenigstens zwei gerade Rohrsegmente auf, die über ein bogenförmiges, insb. kreisbogenförmiges, Rohrsegment miteinander in Verbindung stehen. Derart gekrümmte Meßrohre mit geraden Rohrsegmenten zeichnen im Vergleich zu stetig gekrümmten Meßrohren insb. dadurch aus, daß sie mittels sehr einfacher Biegewerkzeuge kostengünstig gefertigt werden können. Während nämlich stetig gekrümmte Meßrohre üblicherweise weitausladende bogenförmige Rohrsegmente und zumeist auch mehrere Rohrsegmente verschieden großer Krümmungsradien aufweisen, können Meßrohre mit geraden Rohrsegmenten auch unter Verwendung von solchen bogenförmigen Rohrsegmenten gefertigt werden, die einen einzigen Krümmungsradius und/ oder auch vergleichsweise kleine Krümmungsradien aufweisen.

Bevorzugt werden die Meßrohre im Betrieb bei einer natürlichen momentanen Resonanzfrequenz, insb. auch bei konstantgeregelter Schwingungsamplitude, vibrieren gelassen. Da die natürliche Resonanzfrequenz bekanntlich auch von der momentanen Dichte des Fluids abhängig ist, kann mittels marktüblicher Coriolis-Massedurchflußmesser neben dem Massedurchfluß so z.B. auch die Dichte von strömenden Fluiden gemessen werden.

Zum örtlichen Erfassen von Vibrationen des Meßrohrs und zum Erzeugen von mit diesen korrespondierenden Sensorsignalen weist jeder der Meßaufnehmer ferner eine Sensoranordnung mit wenigstens einem einlaßseitigen und wenigstens einem auslaßseitigen, z.B. ebenfalls elektrodynamischen, Schwingungssensor auf. Aufgrund der Überlagerung von Nutz-und Coriolismode weisen die mittels der Sensoranordnung einlaßseitig und auslaßseitig erfaßten Schwingungen des Meßrohrs und somit auch die diesen entsprechenden Sensorsignale bekanntlich eine auch vom Massedurchfluß abhängige Phasendifferenz auf. Mittels der bereits erwähnten Meß- und Betriebsschaltung kann diese Phasendifferenz in der dem Fachmann bekannten direkt oder z.B. auch anhand einer Amplitudendifferenz indirekt gemessenen und zur Generierung des massedurchflußrepräsentativen Meßsignals verwendet werden. Ferner kann mittels der Meß- und Betriebsschaltung unter Berücksichtigung einer aktuellen Frequenz wenigstens eines der beiden Sensorsignale die Dichte ermittelt werden.

Bekanntlich wirken auf den Meßaufnehmer, insb. auf das wenigstens eine Meßrohre, im Betrieb neben den oben beschriebenen, erwünschten Reaktionskräften, auch andere, insb. auch nicht beeiflußbare, physikalische Größen ein. So führt z.B. eine üblicherweise nicht konstant zu haltende Temperatur des Fluids bedingt durch die thermische Ausdehnung des Meßrohrs zwangsläufig auch dazu, daß der Meßaufnehmer neben einer Empfindlichkeit auf die primären Meßgrößen Massedurchfluß und Dichte auch eine Querempfindlichkeit gegenüber einer im Meßaufnehmer momentan herrschenden Temperaturverteilung aufweist. Zur Kompensation solcher temperaturbedingten Störeinflüsse auf die Meßsignale ist bei Coriolis-Massedurchflußmessern oder Coriolis-Massedurchfluß/ Dichtemessern daher üblicherweise auch mindestens ein Temperatursensor z.B. für die Messung der Temperatur des Meßrohrs oder einer Meßrohrumgebung vorgesehen.

Es ist ferner bereits bekannt, daß derartige Meßaufnehmer vom Vibrationstyp neben der vorbeschriebenen Querempfindlichkeit gegenüber einer im Inneren vorliegenden räumlichen und zeitlichen Temperaturverteilung außerdem auch eine signifikante Querempfindlichkeit gegenüber einem im Meßrohrlumen herrschenden statischen Innendruck bzw. gegenüber einer zwischen dem Meßrohrlumen und der äußeren Umgebung des Meßrohrs herrschenden Druckdifferenz aufweisen können. Auf diesen Sachverhalt wird z.B. in der US-A 53 01 557, der WO-A 95/ 16 897 sowie auch der WO-A 98/ 07 009 hingewiesen. Diese Querempfindlichkeit des Meßaufnehmers auf Druck kann damit erklärt werden, daß vom Fluid je nach Höhe des Innendrucks bzw. der Druckdifferenz der Verformung des vibrierenden Meßrohrs eine unterschiedlich hohe Gegenkraft entgegengebracht wird.

Zur Gewährleistung der geforderten hohen Meßgenauigkeit, die üblicherweise zumindest im Bereich von etwa ±0.15% des tatsächlichen Massedurchflusses oder der tatsächlichen Dichte liegen soll, sind daher, insb. bei einem potentiell über einen weiten Bereich von z.B. mehr als 5 bar schwankendem Innendruck, zusätzliche Maßnahmen zur Kompensation der Druckabhängigkeit der Meßsignale erforderlich.

Zur Lösung des Problems wird z.B. in der US-A 53 01 557 vorgeschlagen, Meßrohre von vergleichsweise großer Rohrwanddicke zu verwenden, um den elastischen Verformungen des jeweiligen Meßrohrs zwar eine insgesamt sehr hohe, jedoch dann praktisch konstante Gegenkraft entgegenzusetzen. Dies wiederum führt aber dazu, insb. auch aufgrund des damit einhergehenden Massenzuwachses am Meßrohr, daß neben der Querempfindlichkeit auf Druck die Empfindlichkeit des Meßaufnehmers auf die primären Meßgrößen Massedurchfluß und Dichte abgesenkt wird.

Eine weitere Möglichkeit zur Verringerung der Querempfindlichkeit des Meßaufnehmers auf Druck ist ferner in der WO-A 98/ 07 009 bzw. der WO-A 95/ 16 897 beschrieben. Es wird vorgeschlagen, zunächst den Innendruck bzw. die Druckdifferenz im Betrieb anhand von Resonanzfrequenzen zweier verschiedener, simultan oder nacheinander angeregter Schwingungsmoden des wenigstens einen vibrierenden Meßrohrs zu ermitteln und bei der Generierung des den Massedurchfluß repräsentierenden Meßsignals zu berücksichtigen. Zu diesem Zweck weist die dort beschriebene Erregeranordnung zusätzlich zum sonst üblichen einzigen Errerger wenigstens einen von diesem beabstandet auf das Meßrohr einwirkenden zweiten Schwingungserreger auf. Daher ist, wie sich unschwer erkennen läßt, neben einem mechanischen Mehraufwand auch ein erheblicher Mehraufwand hinsichtlich der Meß- und Betriebsschaltung sowie an darin vorgehaltener Rechenkapazität unvermeidlich. Dies führt einerseits zu einer deutlichen Erhöhung der Herstellkosten eines solchen Coriolis-Massedurchfluß/Dichtemessers. Andererseits bedeutet ein derartige Erhöhung der Komplexität sowohl der installierten Hardware als auch der darin implementierten Firmware eine überproportionale Erhöhung der Fehler- oder gar Ausfallwahrscheinlichkeit und damit einhergehend eine deutliche Erhöhung des Überwachungsaufwands zur Gewährleistung der geforderten Betriebssicherheit des Coriolis-Massedurchfluß/ Dichtemessers.

Ausgehend vom genannten Stand der Technik liegt daher der Erfindung die Aufgabe zugrunde, einen für einen Coriolis-Massedurchflußmesser, insb. auch für einen Coriolis-Massedurchfluß/ Dichtemesser, geeigneten Meßaufnehmer vom Vibrationstyp anzugeben, dessen einziges Meßrohr oder dessen Meßrohre einfach herzustellen, insb. auch einfach zu biegen, sind und dessen Querempfindlichkeit auf den im Meßrohrlumen herrschenden Innendruck oder auf dessen Änderungen mit vergleichsweise einfachen, insb. auch kostengünstigen, Mitteln gering gehalten werden kann.

Zur Lösung der Aufgabe besteht die Erfindung gemäß einer ersten Variante in einem Meßaufnehmer vom Vibrationstyp, insb. zum Erzeugen von massedurchflußabhängigen Corioliskräften in strömenden Fluiden, mit wenigstens einem ein Einlaßende und ein Auslaßende aufweisenden, zumindest zeitweise vibrierenden Meßrohr von vorgebbarem Meßrohrlumen zum Führen eines Fluids, welches Meßrohr
- zum Hindurchströmenlassen des Fluids über ein in das Einlaßende mündendes Einlaßrohrstück und über ein in das Auslaßende mündendes Auslaßrohrstück mit einer angeschlossenen Rohrleitung kommuniziert und
- zum Verformen des Meßrohrlumens im Betrieb Biegeschwingungen um eine das Einlaß- und das Auslaßende imgaginär verbindende Schwingungsachse ausführt,
- wobei das Meßrohr wenigstens ein bogenförmiges Rohrsegment von vorgebbarer Raumform aufweist, das sich einlaßseitig an ein erstes und auslaßseitg an ein zweites gerades Rohrsegment anschließt und
- wobei auf dem bogenförmige Rohrsegment wenigstens ein der Stabilisierung der Raumform dienendes erstes Versteifungselement fixiert ist.

Ferner besteht die Erfindung gemäß einer zweiten Variante in einem Meßaufnehmer vom Vibrationstyp, insb. zum Erzeugen von massedurchflußabhängigen Corioliskräften in strömenden Fluiden, mit wenigstens einem ein Einlaßende und ein Auslaßende aufweisenden, zumindest zeitweise vibrierenden Meßrohr von vorgebbarem Meßrohrlumen zum Führen eines Fluids, welches Meßrohr
- zum Hindurchströmenlassen des Fluids über ein in das Einlaßende mündendes Einlaßrohrstück und über ein in das Auslaßende mündendes Auslaßrohrstück mit einer angeschlossenen Rohrleitung kommuniziert und
- zum Verformen des Meßrohrlumens im Betrieb Biegeschwingungen um eine das Einlaß- und das Auslaßende imgaginär verbindende Schwingungsachse ausführt,
- wobei das Meßrohr wenigstens ein bogenförmiges Rohrsegment von vorgebbarer Raumform aufweist, das sich einlaßseitig an ein erstes und auslaßseitg an ein zweites gerades Rohrsegment anschließt und
- wobei auf dem ersten gerade Rohrsegment wenigstens ein der Stabilisierung der Raumform dienendes erstes Versteifungselement und auf dem zweiten gerade Rohrsegment wenigstens ein Stabilisierung der Raumform dienendes zweites Versteifungselement fixiert sind.

Nach einer bevorzugten ersten Ausgestaltung der Erfindung ist das wenigstens erste Versteifungselement ringförmig ausgebildet und so am Meßrohr fixiert, daß dieses vom Versteifungselement umgriffen ist.

Nach einer bevorzugten zweiten Ausgestaltung der Erfindung umgreift das wenigstens erste Versteifungselement das Meßrohr im wesentlichen koaxial.

Ein Grundgedanke der Erfindung besteht darin, mittels einer möglichst massearmen lokalen Versteifung das Meßrohr partiell möglichst formstabil zu halten und somit praktisch das gesamte Meßrohr derart zu stabilisieren, daß die mit den Biegeschwingungen einhergehenden Verformungen des Meßrohrlumens nahezu unabhängig vom herrschenden Innendruck bzw. unabhängig von oben genannter Druckdifferenz sind. Aufgrund dieser relativ geringen Zusatzmassen am Meßrohr und der somit gleichermaßen niedrig gehaltenen Gesamtmasse des Meßrohrs, bleibt die bereits bei herkömmlichen Meßaufnehmern erreichte hohe Empfindlichkeit auf die primären Meßgrößen Massedurchfluß und Dichte praktisch erhalten.

Die Erfindung beruht auf der Erkenntnis, daß bei in der beschriebenen Weise gekrümmten Meßrohren die Druckabhängigkeit der Verformung zwar im wesentlichen auf die vergleichsweise kurzen bogenförmigen Meßrohrsegmente konzentriert ist, hier jedoch so stark ausgeprägt sein kann, daß dieser Effekt für eine hochgenaue Ermittlung der primären Meßgrößen nicht mehr unberücksichtigt bleiben darf.

Die Erfindung und weitere Vorteile werden nachfolgend anhand von Ausführungsbeispielen näher erläutert, die in den Figuren der Zeichnung dargestellt sind; gleiche Teile sind in den Figuren mit gleichen Bezugszeichen versehen. Falls es der Übersichtlichkeit dienlich ist, wird auf die Angabe bereits vergebener Bezugszeichen in nachfolgenden Figuren verzichtet.
- Fig. 1: zeigt perspektivisch eine erste Variante eines, insb. für einen Coriolis-Massedurchflußmesser oder einen Coriolis-Massedurchfluß-/ Dichtemesser geeigneten, Meßaufnehmer vom Vibrationstyp,
- Fig. 2: zeigt perspektivisch eine zweite Variante eines, insb. für einen Coriolis-Massedurchflußmesser oder einen Coriolis-Massedurchfluß-/ Dichtemesser geeigneten, Meßaufnehmer vom Vibrationstyp und
- Fig. 3: zeigt ein Meßrohr des Meßaufnehmers gemäß Fig. 1 und/oder 2 in einer Seitenansicht.

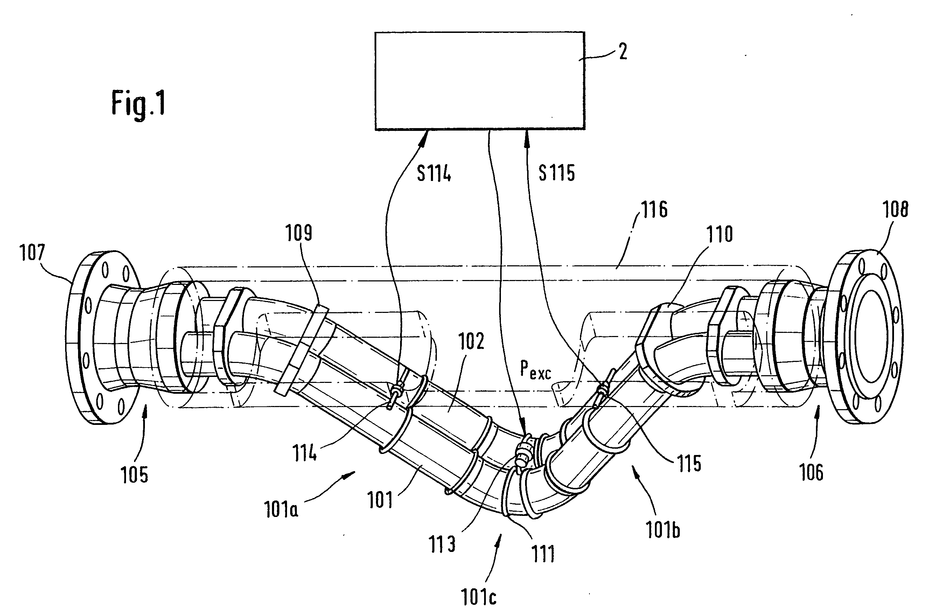

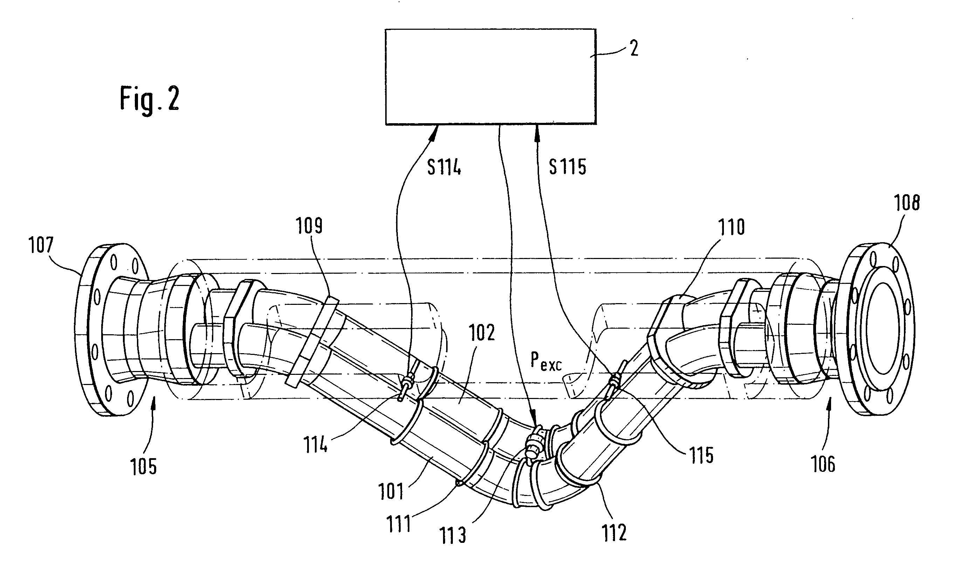

In den Fig. 1, 2 sind Ausführungsbeispiele für einen, insb. auf einen Massedurchfluß *m* eines in einer nicht dargestellten Rohrleitung strömenden Fluids reagierenden, Meßaufnehmers 1 vom Vibrationstyp gezeigt. Der Meßaufnehmer kann z.B. als Meßaufnehmer in einem Coriolis-Massedurchflußmesser verwendet, dazu dienen, im hindurchströmenden Fluid Corioliskräfte zu erzeugen sowie diese sensorisch zu erfassen und in elektronisch auswertbare Meßsignale umzuwandeln.

Zum Führen des zu messenden Fluids umfaßt der Meßaufnehmer 1 ein gekrümmtes erstes Meßrohr 101 von vorgebbarem Meßrohrlumen. Das Meßrohr 101 ist, wie aus den Fig. 1 bis 3 ohne weiteres ersichtlich, so geformt, daß es einlaßseitig ein erstes gerades Rohrsegment 101a und auslaßseitig ein zweites gerades Rohrsegment 101 b aufweist. Die beiden geraden Rohrsegment stehen über ein bogenförmiges, z.B. kreisbogenförmiges, Rohrsegment 101c von vorgebbarer Raumform miteinander in Verbindung. Als Material für das Meßrohr 101 kommen praktisch alle herkömmlicherweise bei solchen Meßrohren verwendeten Werkstoffe in Frage, wie z.B. Edelstahl-, Titan-, Tantal- oder Zirkonium-Legierungen etc.

Wie in den Fig. 1 bis 3 dargestellt, mündet das Meßrohr 101 mit einem Einlaßende in ein Einlaßrohrstück 103 und mit einem Auslaßende in ein Auslaßrohrstück 104. Einlaßrohrstück 103 und Auslaßrohrstück 104 stehen bei eingebautem Meßgerät jeweils mit einem einlaßseitigen bzw. auslaßseitigen Abschnitt der Fluid führenden und üblicherweise geraden Rohrleitung in Verbindung. Die beiden Rohrstücke 103, 104 sind daher bevorzugt zueinander und zu einer die beiden imaginär verbindenden Längsachse A₁ des Meßaufnehmers fluchtend ausgerichtet.

Bevorzugt sind das Meßrohr 101 sowie das Einlaß- und das Auslaßrohrstück 103, 104 aus einem einzigen rohrförmigen Halbzeug von entsprechender Länge gefertigt. Dabei kann das Halbzeug in der dem Fachmann bekannten Weise z.B. mittels Dorn-Biegen oder mittels Press-Biegen etc. in die gewünschte Form gebracht und anschließend auf die erforderliche Länge zugeschnitten werden.

Für den Fall, daß der Meßaufnehmer lösbar in die Rohrleitung zu montieren ist, ist bevorzugt dem Einlaßrohrstück 103 ein erster Flansch 107 und dem Auslaßrohrstück 104 ein zweiter Flansch 108 angeformt; falls erforderlich können Einlaßrohrstück 103 und Auslaßrohrstück 104 aber auch direkt mit der Rohrleitung z.B. mittels Schweißung oder Hartlötung, verbunden werden.

Neben dem ersten Meßrohr 101 umfaßt der Meßaufnehmer 1 im hier gezeigten Ausführungsbeispiel ferner ein, insb. zum Meßrohr 101 identisches, zweites Meßrohr 102; letzteres ist jedoch nicht zwingend erforderlich, d.h. der Meßaufnehmer kann z.B., wie auch in der US-A 55 49 009 sowie in der nicht vorveröffentlichten europäischen Anmeldung 01 112546.5 beschrieben, nur ein einziges gekrümmtes Meßrohr umfassen.

Wie bei derartigen Meßaufnehmern mit Doppelrohranordnung üblich, münden beim Meßaufnehmer des Ausführungsbeispiels das Einlaßrohrstück 103 in ein Einlaßverteilerstück 105 und das Auslaßrohrstück 104 in ein entsprechendes Auslaßverteilerstück 106, so daß daß Meßrohr 101 im Betrieb praktisch via Einlaß- und Auslaßrohrstück 103, 104 sowie Einlaß- und Auslaßverteilerstück 105, 106 mit der angeschlossenen Rohrleitung kommuniziert. Analog dazu steht auch das Meßrohr 102 über das Einlaß- und das Auslaßverteilerstück 105, 106 mit der Rohrleitung in Verbindung.

Bevorzugt weist der Meßaufnehmer 1 ferner wenigstens ein Tragrahmen 116 zum Haltern des Meßrohrs 101 bzw. der Meßrohre 101, 102 mit einer, hier nicht gezeigten, Abdeckung für aus dem Tragrahmen herausragende Meßrohrsegmente auf.

Im Betrieb des Meßaufnehmers 1 werden die hier zwei Meßrohre 101, 102 in einem Nutzmode zu Biegeschwingungen um zur eine Längsachse A₁ des Meßaufnehmers im wesentlichen paralelle Schwingungsachse, insb. auf einer natürlichen Resonanzfrequenz eines Eigenmodes, angeregt, und zwar so, daß, wie bei derartigen Meßaufnehmern üblich, das Meßrohr 101 überwiegend gegenphasig zum Meßrohr 102 vibriert. Die dadurch im hindurchströmenden Fluid induzierten Corioliskräfte bewirken bekanntlich eine auch vom zu messenden Massedurchfluß *m* abhängige, zusätzliche elastische Verformung der Meßrohre 101, 102, die jenen durch die Biegeschwingungen des Nutzmodes hervorgerufenen Verformungen des Meßrohrs 101 bzw. 102 jeweils überlagert ist.

Falls erforderlich, können allfällige, von den vibrierenden Meßrohren 101, 102 im Einlaßrohrstück 103 und Auslaßrohrstück 104 verursachte mechanische Spannungen z.B. dadurch minimiert werden, daß die Meßrohre 101, 102, wie bei derartigen Meßaufnehmern üblich, einlaßseitig mittels wenigstens einer ersten Knotenplatte 109 und auslaßseitig mittels wenigstens einer zweiten Knotenplatte 110 miteinander mechanisch verbunden sind.

Zum Antreiben der Meßrohre 101, 102 umfaßt der Meßaufnehmer 1 mindestens einen Schwingungserreger 113. Dieser dient dazu, eine, von einer entsprechenden Meß- und Betriebsschaltung 2 z.B. des oben genannten Coriolis-Massedurchflußmessers eingespeiste, elektrische Erregerleistung *P*_{*exc*} in solche, z.B. pulsierenden oder harmonischen, Erregerkräfte *F*_{*exc*} umzuwandeln, die symmetrisch, also gleichzeitig, gleichmäßig jedoch gegensinnig, auf Meßrohr 101 und 102 einwirken und somit die zueinander gegenphasigen Schwingungen der Meßrohre 101, 102 erzeugen. Die Erregerkräfte *F*_{*exc*} können in der dem Fachmann bekannten Weise z.B. mittels einer Strom- und/ oder Spannungs-Regelschaltung, hinsichtlich ihrer Amplitude und, z.B. mittels einer Phasen-Regelschleife, hinsichtlich ihrer Frequenz eingestellt werden, vgl. hierzu auch die US-A 48 01 897. Es sei noch erwähnt, daß die Meß- und Betriebsschaltung 2 in der dem Fachmann bekannten Weise in einem entsprechenden, hier jedoch nicht dargestellen, Elektronikgehäuse untergebracht ist, das z.B. direkt am Meßaufnehmer anmontiert oder von diesem entfernt angeordnet sein kann.

Zum Erfassen von Schwingungen der vibrierenden Meßrohre 101, 102 weist der Meßaufnehmer 1 ferner einen einlaßßseitigen ersten Schwingungssensor 114 und einen auslaßseitigen zweiten Schwingungssensor 115 auf, welche beiden Schwingungssensoren 114, 115 auf Bewegungen der Meßrohre 101, 102, insb. deren laterale Auslenkungen und/ oder Verformungen, reagierend, ein entsprechendes erstes bzw. zweites Schwingungssignal s₁₁₄, s₁₁₅ liefern.

Wie bereits erwähnt, bewirken allein die Biegeschwingungen im Nutzmode bereits eine elastische Verformung des Meßrohrs 101. In Abhängigkeit vom im Meßrohr 101 jeweils herrschenden statischen Innendruck bzw. in Abhängigkeit von einer entsprechenden Druckverteilung kann diese Verformung im Betrieb des Meßaufnehmers 1 unterschiedlich ausgebildet sein. Dies wiederum kann bei solchen Meßaufnehmern z.B. bei schwankendem Innendruck bzw. schwankender Druckverteilung dazu führen, daß die durch den Nutzmode erzeugten Corioliskräfte trotz eines gleichbleibenden Massedurchflusses unterschiedlich hoch ausfallen, d.h. herkömmlichen Meßaufnehmer der beschriebenen Art weisen auch eine gewisse Querempfindlichkeit gegenüber Druck, insb. gegenüber statischem Druck, auf.

Zur Unterdrückung oder zumindest zur Verringerung dieser Querempfindlichkeit des Meßaufnehmers 1 ist erfindungsgemäß ferner wenigstens ein erstes Versteifungselement 111 für das Meßrohr 101 vorgesehen, das wie in den gezeigt den Fig. 1 oder 2, im Bereich des gekrümmten Rohrsegments 101c auf dem Meßrohr 101 fixiert ist.

Als Materialien für das Versteifungselement 111 können praktisch dieselben verwendet werden wie für das Meßrohr 101. Da das Versteifungselement 111 betriebsgemäß nicht mit dem Fluid in Berührung kommt, wäre z.B. auch Metalle bzw. Metallegierungen von geringerer Güte als beim Meßrohr 101 ausreichend.

Nach einer bevorzugten Ausgestaltung der Erfindung ist das Versteifungselement 111 ringförmig ausgebildet und so am Meßrohr 101 fixiert, daß dieses, wie auch in den Fig. 1, 2 angedeutet, vom Versteifungselement 111 umgriffen, insb. umspannt, ist, und zwar bevorzugt im wesentlichen koaxial.

Insbesondere für den Fall, daß das Versteifungselement 111 ringförmig ausgebildet ist, kann dieses z.B. auf das Meßrohr 101 thermisch aufgeschrumpft sein. Es kann aber z.B. auch geschlitzt auf das Meßrohr 101 aufgeschoben und durch Schweißen oder Löten mit dem Meßrohr 101 verbunden oder z.B. auch bereits bei der Herstellung des oben erwähnten rohrförmigen Halbzeuges an dieses angeformt bzw. aus diesem ausgearbeitet werden.

Nach einer bevorzugten ersten Variante der Erfindung ist das wenigstens eine Versteifungselement 111 direkt auf dem gekrümmten Rohrsegment 101c des Meßrohrs 101 angebracht, vgl. hierzu Fig. 1.

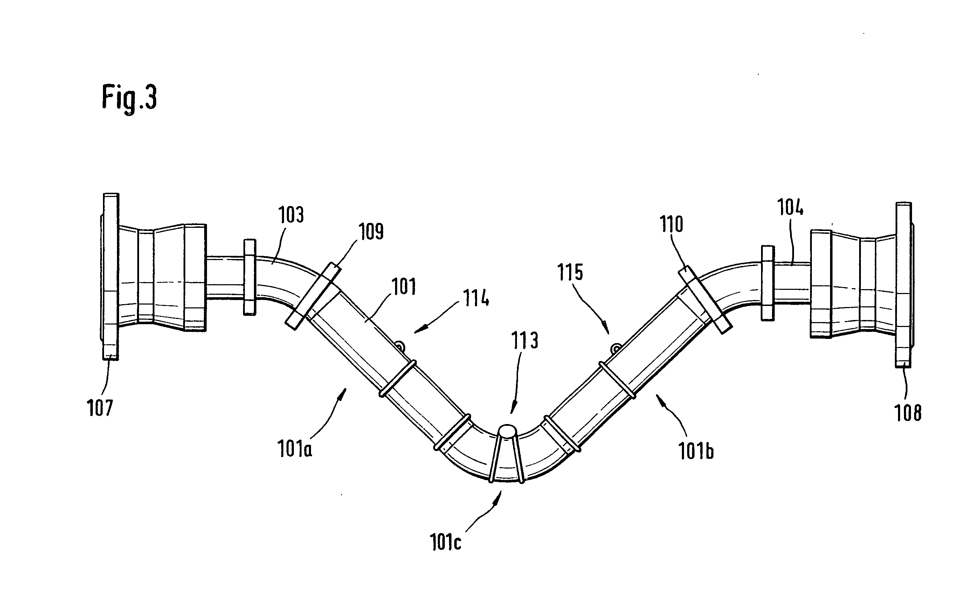

Nach einer bevorzugten zweiten Variante der Erfindung ist das Versteifungselement 111 in der Nähe des gekrümmten Rohrsegments 101c auf dem einlaßseitigen geraden Rohrsegment 101a angebracht, vgl. hierzu Fig. 2. Zumindest bei dieser Variante der Erfindung umfaßt der Meßwandler ferner wenigstens ein im wesentlichen zum Versteifungselement 111 identisches zweites Versteifungselement 112 für das Meßrohr 101. Das Versteifungselement ist bei dieser Variante, wie in Fig. 3.dargestellt, bevorzugt auf dem geraden Rohrsegment 101 b fixiert, und zwar ebenfalls in der Nähe des gekrümmten Rohrsegments 101c, insb. in gleichem Abstand zur Meßrohrmitte wie beim Versteifungselement 111. Wie aus der Fig. 1 ohne weiteres ersichtlich, können aber auch bei der oben erwähnte erste Variante zwei Versteifungselemente 111, 112 für das gekrümmten Rohrsegment 101c vorgesehen sein.

Das Versteifungselement 111 bzw. 112 ist bevorzugt lediglich am Meßrohr 101 fixiert, so daß es dessen Schwingungen, abgesehen von einer möglichst gering gehaltenen Massenträgheit, durch nichts entgegenwirkt. Anders gesagt, das Versteifungselement 111 bzw. 112 soll für diesen Fall weder mit einem allfälligen zweiten Meßrohr 102 noch mit dem Tragrahmen 116 z.B. über federelastische Elemente in Verbindung stehen. Falls erforderlich, kann das Versteifungselement 111 aber auch, wie in den Fig. 1 bzw. 2 angedeutet, z.B. als Halterung für den Schwingungserreger 113 dienen.

Ein Vorteil der Erfidnung ist z.B. auch darin zu sehen, daß solche Versteifungselemente ohne weiteres auch bei bereits bestehenden Meßaufnehmer-Konzepten oder auch bei bereits in Fertigung befindlichen Meßaufnehmer-Typen ohne großen technischen Mehraufwand nachgerüstet werden können, wodurch die Meßgenauigkeit auch bei herkömmlichen Coriolis-Massedurchflußmesser-Typen in einfacher Weise erheblich verbessert werden kann.

## Patentansprüche

1. Meßaufnehmer (1) vom Vibrationstyp, insb. zum Erzeugen von massedurchflußabhängigen Corioliskräften in strömenden Fluiden, mit wenigstens einem ein Einlaßende und ein Auslaßende aufweisenden, zumindest zeitweise vibrierenden Meßrohr (101) von vorgebbarem Meßrohrlumen zum Führen eines Fluids, welches Meßrohr (101)
- zum Hindurchströmenlassen des Fluids über ein in das Einlaßende mündendes Einlaßrohrstück (103) und über ein in das Auslaßende mündendes Auslaßrohrstück (104) mit einer angeschlossenen Rohrleitung kommuniziert und
- zum Verformen des Meßrohrlumens im Betrieb Biegeschwingungen um eine das Einlaß- und das Auslaßende imgaginär verbindende Schwingungsachse ausführt,
- wobei das Meßrohr (101) wenigstens ein bogenförmiges Rohrsegment (101c) von vorgebbarer Raumform aufweist, das sich einlaßseitig an ein erstes gerades Rohrsegment (101a) und auslaßseitg an ein zweites gerades Rohrsegment (101b) anschließt und
- wobei auf dem bogenförmige Rohrsegment (101 c) wenigstens ein der Stabilisierung der Raumform dienendes erstes Versteifungselement (111) fixiert ist.

2. Meßaufnehmer (1) vom Vibrationstyp, insb. zum Erzeugen von massedurchflußabhängigen Corioliskräften in strömenden Fluiden, mit wenigstens einem ein Einlaßende und ein Auslaßende aufweisenden, zumindest zeitweise vibrierenden Meßrohr (101) von vorgebbarem Meßrohrlumen zum Führen eines Fluids, welches Meßrohr (101)
- zum Hindurchströmenlassen des Fluids über ein in das Einlaßende mündendes Einlaßrohrstück (103) und über ein in das Auslaßende mündendes Auslaßrohrstück (104) mit einer angeschlossenen Rohrleitung kommuniziert und
- zum Verformen des Meßrohrlumens im Betrieb Biegeschwingungen um eine das Einlaß- und das Auslaßende imgaginär verbindende Schwingungsachse ausführt,
- wobei das Meßrohr (101) wenigstens ein bogenförmiges Rohrsegment (101c) von vorgebbarer Raumform aufweist, das sich einlaßseitig an ein erstes gerades Rohrsegment (101 a) und auslaßseitg an ein zweites gerades Rohrsegment (101b) anschließt und
- wobei auf dem ersten geraden Rohrsegment (101 a) wenigstens ein der Stabilisierung der Raumform dienendes erstes Versteifungselement (111) und auf dem zweiten geraden Rohrsegment (101b) wenigstens ein Stabilisierung der Raumform dienendes zweites Versteifungselement (112) fixiert sind.

3. Meßaufnehmer (1) nach Anspruch 1 oder 2, bei dem das wenigstens erste Versteifungselement (111) ringförmig ausgebildet und so am Meßrohr (101) fixiert ist, daß dieses vom Versteifungselement (111) umgriffen ist.

4. Meßaufnehmer (1) nach Anspruch 3, bei dem das wenigstens erste Versteifungselement (111) das Meßrohr (101) im wesentlichen koaxial umgreift.
